# EUROPÄISCHE PATENTSCHRIFT

(11) **EP 3 502 529 B1**
(45) Veröffentlichungstag und Bekanntmachung des Hinweises auf die Patenterteilung: **11.11.2020**
(21) Anmeldenummer: 17465600.9
(22) Anmeldetag: 20.12.2017
(51) Int. Cl.: F16K 1/44, F16K 1/50, F16K 11/04, F16K 27/08, F02M 26/65

(54) **VENTIL**
VALVE
SOUPAPE

(43) Veröffentlichungstag der Anmeldung: 26.06.2019
(73) Patentinhaber: Vitesco Technologies GmbH, 30165 Hannover (DE)
(72) Erfinder: Petca, Eduard Cornel, 300693 Timisoara (RO)

(56) Entgegenhaltungen:
- GB-A- 1 027 773
- US-A- 5 197 508

## Beschreibung

Gegenstand der Erfindung ist ein Ventil mit einem Gehäuse, umfassend drei hintereinander liegende Ventilkammern, wobei zwei Ventilkammern durch eine einen Ventilsitz aufweisende Öffnung miteinander verbunden sind, einem Stößel, zwei Lagerstellen für den Stößel, zwei an dem Stößel angeordneten Schließkörper, wobei jeder Schließkörper mit einem Ventilsitz zusammenwirkt.

Solche Ventile werden zum Öffnen und Verschließen von Abgasleitungen in Kraftfahrzeugen eingesetzt und sind somit bekannt. Wichtig für die Funktion solcher Ventile ist die Dichtheit, mit der das Ventil die Leitung verschließt. Die Lagerung des Stößels hat daher Einfluss auf die Dichtheit. Die Schließkörper befinden sich im Bereich der Trennwände zweier Ventilkammern. Die Lagerstellen des Stößels sind daher in je einer äußeren Wandungen der beiden außenliegenden Ventilkammern angeordnet. Dadurch besitzt der Stößel bereits eine nicht unerhebliche axiale Erstreckung. Hinzu kommt, dass der Stößel aufgrund seiner linearen Bewegung beim Öffnen und Schließen des Ventils einen entsprechenden Bauraum benötigt. Insbesondere beim dem Lager, welches das freie Ende des Stößels aufnimmt, beziehungsweise bei dessen Abdeckung muss dieser für die Stößelbewegung erforderliche Bauraum vorgesehen werden. Nachteilig ist daher der Aufwand hinsichtlich der Anzahl der Teile und für deren Montage für die Lagerung des freien Endes des Stößels.

Aus der US 5 197 508 ist ein Ventil mit den Merkmalen des Oberbegriffs von Patentanspruch 1 bekannt. Hierbei ist die Lagerung des Stößels, wie vorstehend erläutert, mit einem hohen Aufwand verbunden.

Die GB 1 027 773 A betrifft Führungen für Elemente, die axial in Bohrungen von Gehäusen hin- und herbewegbar sind. Insbesondere bezieht sich diese Veröffentlichung auf Ventilstößel. Der Stößel ist hierbei zur Lagerung mit einem zusätzlichen Bauteil verbunden, das eine Aufnahme für den Stößel und mindestens zwei Arme, welche sich von der Aufnahme radial nach außen erstrecken, aufweist. Die freien Enden der Arme sind fest in einem umgebenden Gehäuse gelagert. Jeder Arm hat einen flexiblen Bereich, der derart ausgebildet ist, dass die Aufnahme der Bewegung des Stößels folgt.
Der Erfindung liegt die Aufgabe zugrunde, ein Ventil zu schaffen, welches ein sicheres Öffnen und Schließen des Ventils erlaubt. Das Ventil soll dabei einfach aufgebaut sein.

Diese Aufgabe wird erfindungsgemäß bei einem Ventil der angegebenen Art durch die kennzeichnenden Merkmale von Patentanspruch 1 gelöst.

Die Erfindung betrifft somit ein Ventil, bei dem der Stößel mit einem zusätzlichen Bauteil verbunden ist, wobei das zusätzliche Bauteil eine Aufnahme für den Stößel besitzt, mindestens zwei Arme, welche sich von der Aufnahme nach radial außen erstrecken und die freien Enden der Arme fest mit einem mit dem Gehäuse verbundenen Bauteil verbunden sind, wobei jeder Arm einen flexiblen Bereich besitzt, der derart ausgebildet ist, dass die Aufnahme der Bewegung des Stößels folgen kann. Das zusätzliche Bauteil ersetzt eine fest eingebaute Lagerstelle. Der wesentliche Vorteil besteht darin, dass das zusätzliche Bauteil mit einer Lagerung des Stößels ohne Relativbewegung zwischen Lager und Stößel auskommt. Ermöglicht wird dies durch die flexiblen Bereiche am zusätzlichen Bauteil. Damit entfällt eine Schmierung des Lagers, wodurch der Aufwand für die Lagerstelle deutlich reduziert ist. Darüber hinaus haben die flexiblen Bereiche eine stabilisierende Wirkung in radialer Richtung.

Das zusätzliche Bauteil ist am Stößel zwischen den beiden Schließkörpern angeordnet. Die beiden Ventilsitze werden von einem Bauteil gebildet, welches fest mit dem Gehäuse verbunden ist. Somit kann das zusätzliche Bauteil mit diesem die Ventilsitze aufweisenden Bauteil vormontiert werden. Dadurch wird die Montage des Ventils erleichtert. Der entscheidende Vorteil besteht jedoch darin, dass die Länge des Stößels deutlich reduziert werden kann. Während vormals der Stößel für eine Lagerung alle drei Ventilkammern durchdringen musste, ermöglicht diese Ausgestaltung eine axiale Länge, die einzig und allein von der Position der Schließkörper bestimmt wird.

Eine sichere und langzeitstabile Verbindung des zusätzlichen Bauteils mit dem Stößel wird erreicht, wenn die Aufnahme des zusätzlichen Bauteils fest mit dem Stößel verbunden, vorzugsweise verschweißt oder verpresst ist.

Die Führung des Stößels während des Öffnens oder Schließens wird in zuverlässiger Weise bereits mit einem zusätzlichen Bauteil erreicht, welches zwei Arme aufweist. Ein solches zusätzliches Bauteil zeichnet sich durch einen einfachen Aufbau aus und ist daher besonders kostengünstig. Bei Einsätzen des erfindungsgemäßen Ventils unter sehr rauen Betriebsbedingungen werden an die Lagerung deutlich höhere Anforderungen gestellt. In diesen Fällen hat sich ein zusätzliches Bauteil mit sechs Armen als vorteilhaft herausgestellt. Für die meisten Anwendungsfälle ist jedoch ein zusätzliches Bauteil mit drei bis vier Armen ausreichend. Zum einen ist der Aufwand in der Herstellung und Montage überschaubar, zum anderen führt ein drei- oder vierfache Aufnahme des zusätzlichen Bauteils im Gehäuse zu einer sicheren Ausbalancierung der Stößelbewegungen.

Eine feste Verbindung des zusätzlichen Bauteils mit dem fest mit dem Gehäuse in Kontakt stehenden Bauteil wird gewährleistet, wenn die freien Enden der Arme des zusätzlichen Bauteils in eine Bohrung des fest mit dem Gehäuse in Kontakt stehenden Bauteils eingepresst sind.

Die flexiblen Bereiche lassen sich besonders einfach dadurch erzeugen, dass diese Bereiche wellenförmig ausgebildet sind. Die wellenförmige Ausbildung erlaubt zum einen, dass sich die Aufnahme entsprechend der Stößelbewegung gegenüber den freien Enden der Arme bewegen kann. Zum anderen besitzen die flexiblen Bereiche eine zentrierende Wirkung, so dass sich der Stößel jederzeit entlang seiner Längsachse bewegt.

An zwei Ausführungsbeispielen wird die Erfindung näher erläutert. Dabei zeigen
- Fig. 1: ein Ventil nach dem Stand der Technik,
- Fig. 2: eine vergrößerte Darstellung eines erfindungsgemäß ausgebildeten Ventils, und
- Fig. 3: das zusätzliche Bauteil nach Fig. 2.

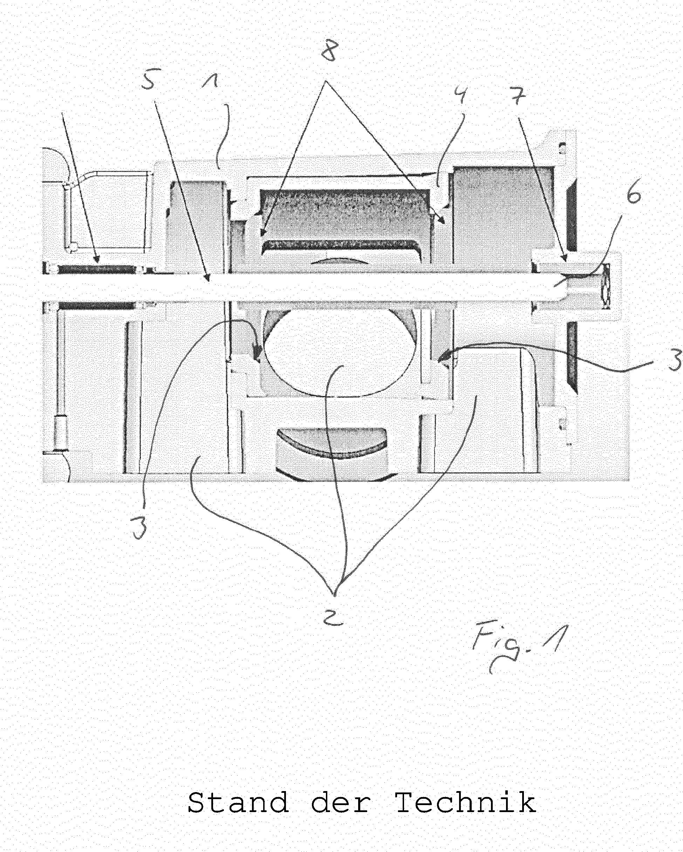

Das Ventil in Figur 1 besteht aus einem Gehäuse 1, mit drei nebeneinander angeordneten Ventilkammern 2. In dem Gehäuse 1 ist ein zwei Ventilsitze 3 aufweisendes Gehäuseteil 4 angeordnet, welches zusammen mit den Wandungen des Gehäuses 1 die Ventilkammern 2 bildet. Ein Stößel 5 durchdringt alle drei Ventilkammern 2. Ein freies Ende 6 des Stößels 5 ist in einem Lager 7 einer Außenwandung des Gehäuses 1 aufgenommen. Das Lager 7 weist eine gewisse axiale Erstreckung auf, um eine lineare Bewegung des Stößels 5 zu ermöglichen. Im Bereich der Ventilsitze 3 sind am Stößel 5 je ein Schließkörper 8 befestigt. Die Schließkörper 8 wirken mit den Ventilsitzen 3 zusammen. Auf der dem freien Ende 6 abgewandten Seite des Stößels 5 ist dieser über ein nicht dargestelltes Getriebe mit einem ebenfalls nicht dargestellten Elektromotor verbunden. Mittels eines Getriebes wird die Drehbewegung des Elektromotors in eine lineare Bewegung eines Stößels 5 zum Öffnen und Schließen des Ventils umgewandelt. Bei geöffnetem Ventil kann ein Gas von einer Ventilkammer in die andere strömen.

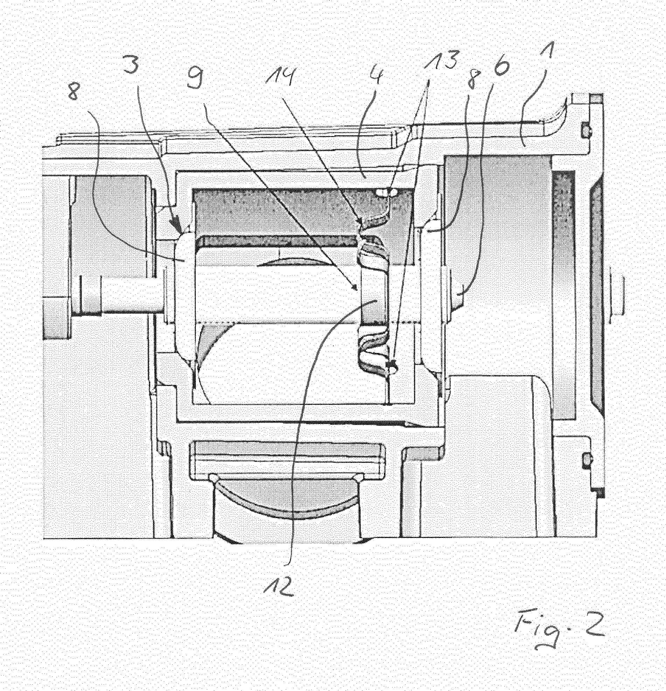

Figur 2 zeigt den Stößel 5 eines erfindungsgemäßen Ventils mit den beiden Schließkörpern 8. Zwischen beiden Schließkörpern 8 ist am Stößel 5 ein zusätzliches Bauteil 9 angeordnet, so dass am freien Ende 6 des Stößels 5 ein Schließkörper angeordnet ist. Das zusätzliche Bauteil 11 besitzt eine Aufnahme 12, welche den Stößel 5 umgibt. Die Aufnahme 12 ist mit dem Stößel 5 verschweißt. Das Bauteil 4 besitzt Bohrungen 13, in die je ein Arm 14 des zusätzlichen Bauteils 9 eingepresst ist.

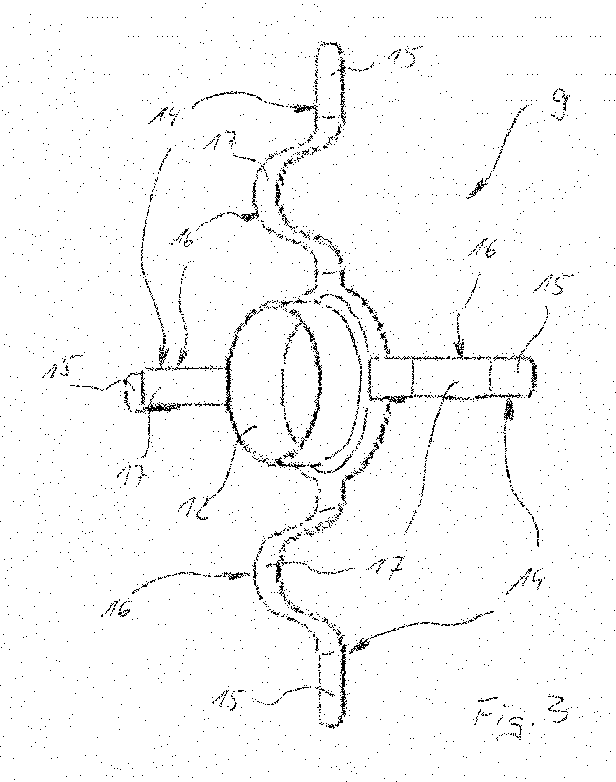

Der Aufbau des zusätzlichen Bauteils 9 ist in Fig. 3 dargestellt. Von der zentralen ringförmigen Aufnahme 12 erstrecken sich vier gleichmäßig am Umfang der Aufnahme 12 verteilte Arme 14 nach radial außen. Die freien Enden 15 der Arme 14 sind zum Einpressen in das Bauteil 4 ausgebildet. Jeder Arm 14 besitzt einen flexiblen Bereich 16. Die flexiblen Bereiche 16 sind wellenförmig ausgebildet, wobei die Ausrichtung der Wellenberge 17 parallel zur Längsachse des Stößels 5 verläuft. Diese Ausrichtung ermöglicht eine Bewegung der Aufnahme 12 gemäß der Stößelbewegung. Sofern der Stößel 5 eine Bewegung quer zu dieser linearen Bewegung ausführen würde, was durch von außen auf das Ventil wirkende Einflüsse oder abrupte Gasströmungen zwischen den Ventilkammern auftreten kann, üben die flexiblen Bereiche 16 eine zentrierende Wirkung auf den Stößel 5 aus, indem sie diese Bewegungskomponenten dämpfen und auslöschen.

## Patentansprüche

1. Ventil mit einem Gehäuse, umfassend drei hintereinander liegende Ventilkammern, wobei zwei Ventilkammern durch eine einen Ventilsitz aufweisende Öffnung miteinander verbunden sind, einem Stößel, zwei Lagerstellen für den Stößel, zwei an dem Stößel angeordneten Schließkörpern, wobei jeder Schließkörper mit einem Ventilsitz zusammenwirkt, **dadurch gekennzeichnet, dass** der Stößel (5) mit einem zusätzlichen Bauteil (9) verbunden ist, das eine Aufnahme (12) für den Stößel (5) und mindestens zwei Arme (14) besitzt, welche sich von der Aufnahme (12) radial nach außen erstrecken, wobei die freien Enden (15) der Arme (14) fest mit einem mit dem Gehäuse (1) fest verbundenen Bauteil (4) verbunden sind, wobei jeder Arm (14) einen flexiblen Bereich (16) besitzt, der derart ausgebildet ist, dass die Aufnahme (12) der Bewegung des Stößels (5) folgt, und wobei das zusätzliche Bauteil (9) am Stößel (5) zwischen den beiden Schließkörpern (8) angeordnet ist und die beiden Ventilsitze (3) von dem Bauteil (4) gebildet werden, welches fest mit dem Gehäuse (1) verbunden ist.

2. Ventil nach Anspruch 1, **dadurch gekennzeichnet, dass** die Aufnahme (12) des zusätzlichen Bauteils (9) fest mit dem Stößel (4) verbunden, vorzugsweise verschweißt oder verpresst ist.

3. Ventil nach Anspruch 1 oder 2, **dadurch gekennzeichnet, dass** das zusätzliche Bauteil (9) zwei bis sechs Arme (14), vorzugsweise drei bis vier Arme (14) besitzt.

4. Ventil nach zumindest einem der vorhergehenden Ansprüche, **dadurch gekennzeichnet, dass** die freien Enden (15) der Arme (14) des zusätzlichen Bauteils (91) in eine Bohrung (13) des fest mit dem Gehäuse (1) verbundenen Bauteils (4) eingepresst sind.

5. Ventil nach zumindest einem der vorhergehenden Ansprüche, **dadurch gekennzeichnet, dass** die flexiblen Bereiche (16) des zusätzlichen Bauteils (9) wellenförmig ausgebildet sind.

## Claims

1. Valve having a housing which comprises three valve chambers which are situated one behind the other, wherein two valve chambers are connected to one another by way of an opening which has a valve seat, having a plunger, having two bearing points for the plunger, and having two closing bodies which are arranged on the plunger, wherein each closing body interacts with a valve seat, **characterized in that** the plunger (5) is connected to an additional component (9), which has a receiving part (12) for the plunger (5) and has at least two arms (14) which extend radially outwards from the receiving part (12), wherein the free ends (15) of the arms (14) are fixedly connected to a component (4) which is fixedly connected to the housing (1), wherein each arm (14) has a flexible region (16) which is formed such that the receiving part (12) follows the movement of the plunger (5), and wherein the additional component (9) is arranged on the plunger (5) between the two closing bodies (8), and the two valve seats (3) are formed by the component (4), which is fixedly connected to the housing (1) .

2. Valve according to Claim 1, **characterized in that** the receiving part (12) of the additional component (9) is fixedly connected, preferably welded or press-fitted, to the plunger (4) .

3. Valve according to Claim 1 or 2, **characterized in that** the additional component (9) has two to six arms (14), preferably three to four arms (14).

4. Valve according to at least one of the preceding claims, **characterized in that** the free ends (15) of the arms (14) of the additional component (9) are pressed into a bore (13) of the component (4) connected fixedly to the housing (1).

5. Valve according to at least one of the preceding claims, **characterized in that** the flexible regions (16) of the additional component (9) are of undulating form.

## Revendications

1. Soupape munie d'un corps, comprenant trois chambres de soupape situées les unes après les autres, deux chambres de soupape étant reliées l'une à l'autre par une ouverture présentant un siège de soupape, un poussoir, deux points d'appui pour le poussoir, deux obturateurs disposés sur le poussoir, chaque obturateur coopérant avec un siège de soupape, **caractérisée en ce que** le poussoir (5) est relié à un composant supplémentaire (9) possédant un logement (12) pour le poussoir (5) et au moins deux bras (14) qui s'étendent radialement vers l'extérieur à partir du logement (12), dans laquelle les extrémités libres (15) des bras (14) sont reliées solidement à un composant (4) relié solidement au corps (1), chaque bras (14) possédant une zone flexible (16) qui est réalisée de telle sorte que le logement (12) suit le mouvement du poussoir (5), et dans laquelle le composant supplémentaire (9) est disposé sur le poussoir (5) entre les deux obturateurs (8), et les deux sièges de soupape (3) sont formés par le composant (4) qui est relié solidement au corps (1).

2. Soupape selon la revendication 1, **caractérisée en ce que** le logement (12) du composant supplémentaire (9) est relié solidement au poussoir (4), de préférence soudé ou compressé.

3. Soupape selon la revendication 1 ou 2, **caractérisée en ce que** le composant supplémentaire (9) possède de deux à six bras (14), de préférence trois à quatre bras (14).

4. Soupape selon au moins l'une des revendications précédentes, **caractérisée en ce que** les extrémités libres (15) des bras (14) du composant supplémentaire (91) sont enfoncées dans un alésage (13) du composant (4) relié solidement au corps (1) .

5. Soupape selon au moins l'une des revendications précédentes, **caractérisée en ce que** les zones flexibles (16) du composant supplémentaire (9) sont réalisées de manière ondulée.
